# EUROPEAN PATENT APPLICATION

(11) **EP 3 967 844 A1**
(43) Date of publication of application: **16.03.2022**
(21) Application number: 21193453.4
(22) Date of filing: 27.08.2021
(51) Int. Cl.: F01C 1/356, F02B 53/00, F01C 21/08

(54) **ROTARY ENGINE ARCHITECTURE**

(30) Priority: 09.09.2020 IT 202000021277
(71) Applicant: Zoratto, Antonino Pietro, 35030 Veggiano (PD) (IT)
(72) Inventor: Zoratto, Antonino Pietro, 35030 Veggiano (PD) (IT)
(74) Representative: Busana, Omar

(57) **Abstract**

A rotary engine architecture (12) comprises at least one housing (14) and at least one rotor (16) arranged with a shaft (18) and adapted to rotate within said housing (14) about an axis of rotation (x). The rotor (16) comprises at least one cavity (20). The housing (14) comprises at least one combustion chamber (22) arranged with at least one fuel injector (24) and one ignition device (26). The housing (14) further comprises: at least one combustion unit (28) comprising a combustion blade (280) movable in a respective combustion blade seat (282) so as to protrude towards the inside of the housing (14), the combustion blade (280) being arranged upstream with respect to the combustion chamber (22); at least one intake/exhaust unit (30) comprising an intake/exhaust blade (300) movable in a respective intake/exhaust blade seat (302) so as to protrude towards the inside of the housing (14), the intake/exhaust blade (300) being interposed between an exhaust opening (34) and an intake opening (36), the exhaust opening being upstream of the intake/exhaust blade (300); and at least one compression unit (32) comprising a compression blade (320) movable in a respective compression blade seat (322) so as to protrude towards the inside of the housing (14); and a compression opening (38) provided upstream of the compression blade (320). The compression unit (32) also comprises a compression duct (40) adapted for the selective communication of fluid between said compression opening (38) and said combustion chamber (22). The combustion blade (280), the intake/exhaust blade (300) and the compression blade (320) are adapted to rub with one end edge (284, 304, 324) thereof on the outer surface of the rotor (16) and in particular of the at least one cavity (20).

## Description

### FIELD OF APPLICATION

This invention relates to a rotary engine architecture. In particular, this invention relates to a blade-type rotary engine architecture.

### PRIOR ART

As is well known, since the Otto cycle was proposed and the piston engine was invented, efforts have been made to solve the problem of first- and second-degree vibrations due to the unbalance of the masses involved with respect to the drive shaft.

This problem, although drastically reduced with respect to the past, remains even in contemporary engines, where the continuously stressed components must be adequately designed and isolated from the frame of the vehicle on which they are installed.

An attempt to further improve this issue was made with the so-called Wankel-type rotary engine.

However, the Wankel engine, despite having excellent performance, has some different limitations compared to the cylinder piston system, such as the seals between the moving parts, which did not allow it to have a diffusion comparable to the cylinder piston system.

In addition to the Wankel engine, a further type of rotary engine known as the rotary blade engine is known in the state of the art.

In this type of engine, in order to separate the various phases of operation of the engine from each other, moving blades are used according to substantially radial directions; said blades may be arranged on the stator (also referred to below as the housing) or on the rotor.

An example of such an engine type is described in international patent application WO9810172, wherein a system is described in which a stator having a cylindrical cavity and a rotor having two lobes are provided. In this case, the stator is arranged with an exhaust opening and an intake opening, a combustion chamber in a position substantially diametrically opposed to the openings, and two movable blades positioned, one upstream and one downstream, with respect to the combustion chamber.

This is a complex system, in which, in order to achieve the necessary conditions for the explosion in the combustion chamber and the subsequent expansion, the blades must be moved with complex systems, which in addition do not allow for high efficiencies to be obtained. Moreover, the surfaces over which the seal must be ensured are very large and difficult to implement in practice.

A further example of a rotary blade engine is shown in U.S. Patent 3,797,464, in which a rotary blade engine architecture is outlined that is automatically driven by a spring element that pushes the blade against the outer surface of the rotor. However, the system has some disadvantages related to the placement and sizing of the two combustion chambers, and to the fact that separation blades are provided that exit in a radial direction from the rotor.

Again, in US 3,921,596 a rotary blade engine is proposed, which is characterized by the presence of numerous cavities of different shapes on the outer surface of the rotor. In this case, although there are no blades protruding from the rotor, obtaining seals between the rotor and housing is a rather complex operation in a real embodiment of the engine.

Also shown in GB 153154A1 is a rotary blade engine, simpler with respect to the preceding solutions, arranged with blades protruding from the housing, that rub on the outer surface of the rotor. However, the efficiency of the engine is very low, since there is no compression phase provided before the air is supplied to the combustion chamber.

A further example of a rotary engine is shown in US 2017/089201, wherein the blades are moved through a complex system of rods and rockers.

Thus, the prior art, while widely appreciated, is not without its drawbacks.

First, the rotary blade engine architectures that have been proposed suffer from numerous issues regarding, for example, component wear, sealing between components in contact, and low efficiencies.

Furthermore, many of the proposed architectures, although offering modes of operation that appear advantageous, are difficult to implement from a practical standpoint.

### DISCLOSURE OF THE INVENTION

Thus, there is a need to resolve the cited drawbacks and limitations in reference to the prior art.

Therefore, the need is felt to make available a rotary blade engine that allows for higher efficiencies than the architectures that have been proposed and implemented.

Moreover, there is a particular need to make available a rotary blade engine architecture that at least partially resolves the drawbacks related to wear of the blade engines of the prior art.

These requirements are at least partially met by a rotary engine architecture in accordance with claim 1.

### DESCRIPTION OF THE DRAWINGS

Further features and advantages of this invention will become more apparent from the following detailed description of preferred, non-limiting embodiments thereof, wherein:
- Fig. 1-4 show schematically a rotary blade engine according to a possible embodiment of the present invention, in four operating configurations;
- Fig. 5 is a schematic front view of a rotor of a rotary blade engine according to a possible embodiment of the present invention;
- Fig. 6 is a schematic cross-sectional side view, according to cross-sectional plane A-A of Fig. 5, of the rotor in Fig 5;
- Fig. 7 is a schematic plan view from the top of the rotor in Fig. 5;
- Fig. 8 is a schematic front view of a housing according to a possible embodiment of this invention;
- Fig. 9 is a schematic cross-sectional side view, according to cross-sectional plane B-B, of the housing in Fig. 8;
- Fig. 10 is a schematic plan view from the top of the housing in Fig. 8;
- Fig. 11 is a schematic cross section of a component according to the present invention;
- Fig. 12-14 are schematic views of possible embodiments of components of a rotary engine according to the present invention;
- Fig. 15A-16D are schematic views of possible embodiments of a rotary engine according to the present invention;
- Fig. 17 is a schematic plan view from above of a portion of a rotary engine according to one embodiment of the present invention;
- Fig. 18 is a schematic cross-sectional view, obtained using cross-sectional plane A-A of Fig. 17, of a portion of a rotary engine according to one embodiment of the invention;
- Fig. 19 is a schematic side view of a rotary engine component according to one embodiment of the invention;
- Fig. 20 is a schematic plan view from the top of the component in Fig. 19; and
- Fig. 21 and 22 are schematic views of alternative embodiments of a rotary blade engine according to the present invention.

Elements or parts of elements common to the embodiments described hereinafter will be indicated with the same numerical references.

### DETAILED DESCRIPTION

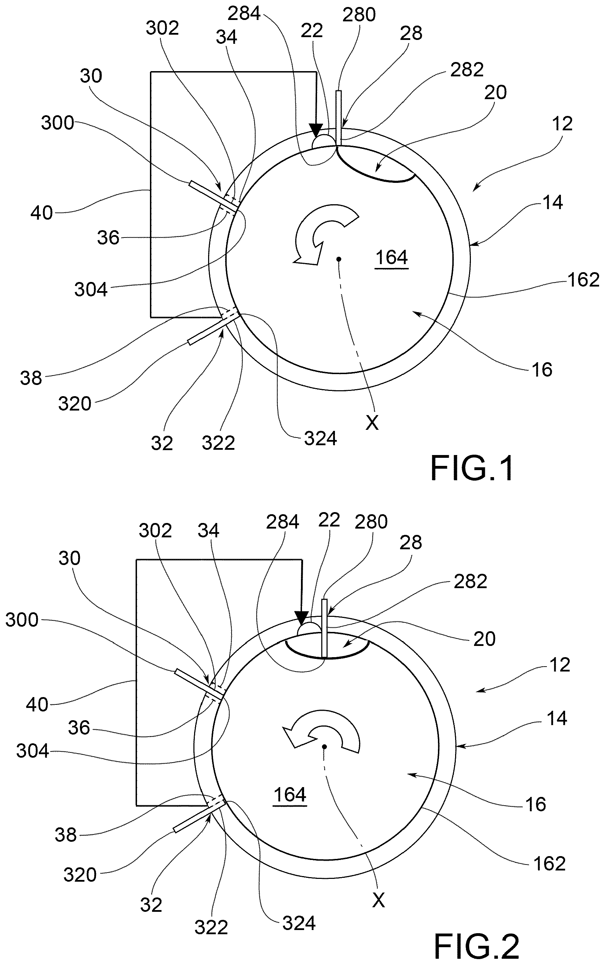

A rotary engine architecture 12 according to the present invention is shown schematically in Fig. 1.

The rotary engine architecture 12 comprises at least one housing 14 and at least one rotor 16, arranged with a shaft 18, and adapted to rotate within the housing 14 about an axis of rotation x.

The housing 14 comprises at least one combustion chamber 22 arranged with at least one fuel injector 24 and an ignition device 26.

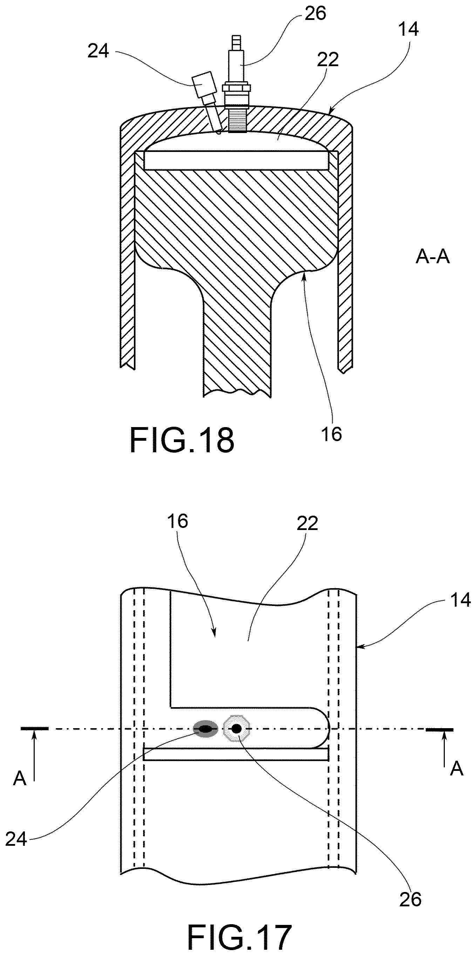

An example of the placement of a fuel injector 24 and an ignition device 26 is shown in Fig. 17 and 18.

The rotor 16 comprises at least one cavity 20, which, during rotation of the rotor 16 within the housing 14, enters into fluid communication with the at least one combustion chamber 22.

The housing 14 further comprises:
- at least one combustion unit 28 comprising a movable combustion blade 280 in a respective combustion blade seat 282 so as to protrude towards the inside of the housing 14, the combustion blade 280 being arranged upstream with respect to the combustion chamber 22;
- at least one intake/exhaust unit 30 comprising an intake/exhaust blade 300 movable in a respective intake/exhaust blade seat 302 so as to protrude towards the inside of the housing 14, the intake/exhaust blade 300 being interposed between an exhaust opening 34 and an intake opening 36, the exhaust opening being upstream with respect to the intake/exhaust blade 300; and
- at least one compression unit 32 comprising a compression blade 320 movable in a respective compression blade seat 322 so as to protrude towards the inside of the housing 14, and a compression opening 38 arranged upstream with respect to the compression blade 320.

In this discussion, the expressions "upstream" or "downstream" mean the position of an element with respect to an element taken as a reference in the direction of rotation of the rotor with respect to the housing.

The compression unit 32 further comprises a compression duct 40 adapted for the selective communication of fluid between the compression opening 38 and the combustion chamber 22.

The blades 280, 300, and 320 are adapted to rub, with one of their end edges 284, 304, 324, on the outer surface of the rotor 16 and in particular of the at least one cavity 20. In particular, the end edge is also adapted to rub on the lateral surfaces of the cavity 20. Advantageously, the end edge may then be U-shaped.

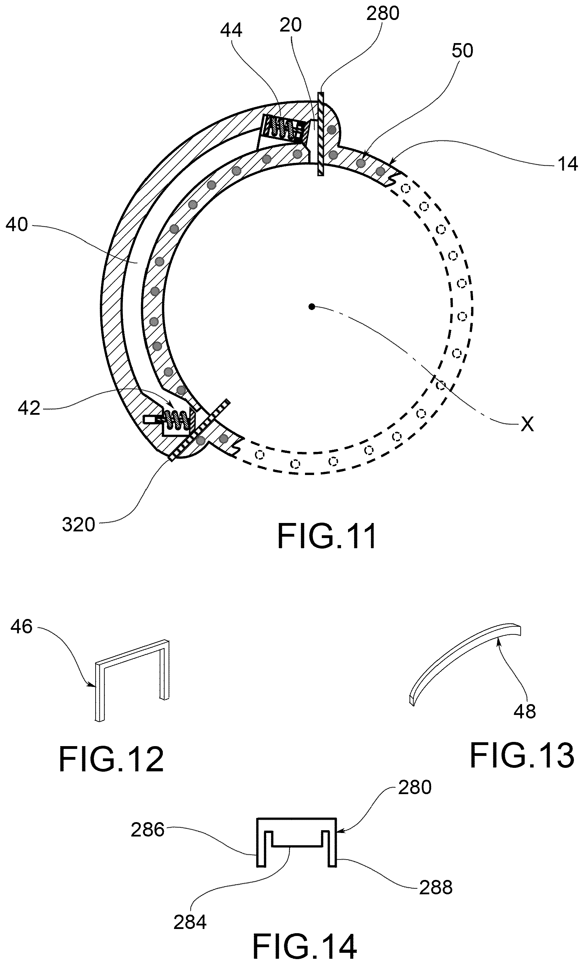

An example of a blade 280 arranged with a U-shaped edge 284 is shown in Fig. 14.

As seen in the appended figures, the rotor 16 comprises a substantially cylindrical lateral surface 162 and may comprise two end circles 164, 166. According to a possible embodiment, the at least one cavity 20 may be provided on the lateral surface 162, and/or also at one or both end circles 164, 166.

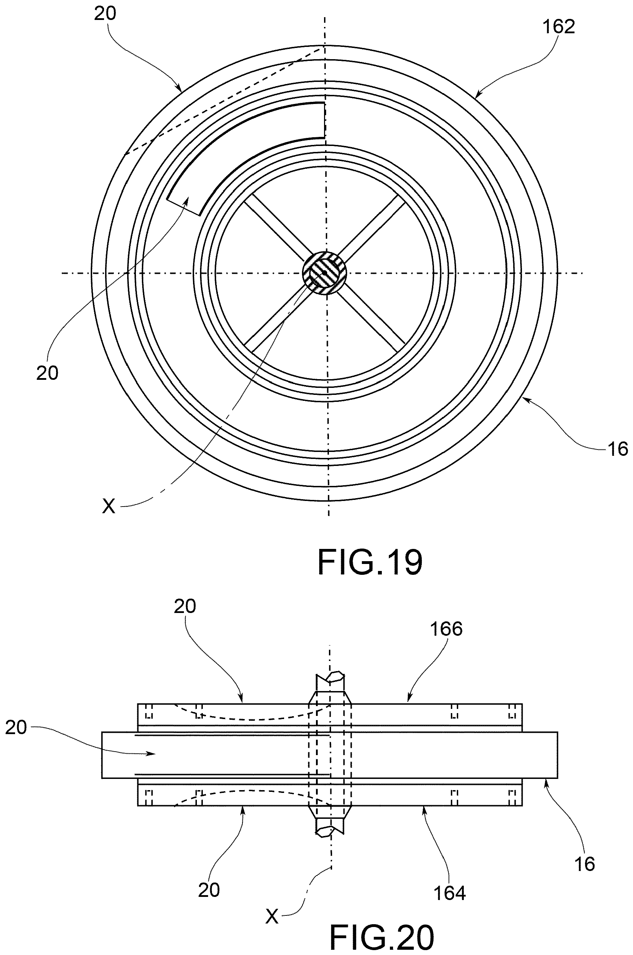

In the possible embodiment shown in Fig. 19 and 20, a cavity 20 positioned at both end circles 164, 166 and at the lateral surface 162 is shown.

The at least one cavity 20 allows for the containment and transport of intake air, compressed air, or the product of combustion, due to the interaction of the at least one cavity 20 with the blades 280, 300, 320. In effect, the edge 284, 304, 324 of the blade 280, 300, 320 rubs along the surface of the at least one cavity 20, preventing the passage of fluid between the two sides of said blade 280, 300, 320.

Also between the rotor 16 and the housing 14, in a manner known per se, sealing and/or oil scraper rings may be provided, which may be provided either at the housing 14 or at the rotor 16.

The at least one cavity 20 represents the displacement of the engine and, from a geometric point of view, may be made in different ways, depending on the purpose.

However, there are some limitations, for example the cavity 20 may not exceed a certain length on the circumference of the rotor depending on the number of combustion chambers and cavities present on the housing and rotor, respectively.

Advantageously, the at least one cavity 20 may extend in directions parallel to the axis of rotation x. In particular, it may expand (along the axis of rotation x) to increase the displacement.

For example, according to one possible embodiment, the at least one cavity 20 may extend in a direction parallel to the x-axis for about 20 cm. However, this dimension is given solely by way of example, since, as may be easily deduced, this dimension may be different.

According to alternative embodiments, to increase the engine displacement it may be possible to key another rotor 16 onto the same drive shaft 18 (similar to that which occurs in a multi-stage turbojet engine).

According to a possible embodiment, the at least one cavity 20 may be arranged on the cylindrical lateral surface of the rotor 16. In alternative embodiments, the at least one cavity 20 may be arranged on both base circles of the cylindrical lateral surface. In further embodiments, the cavities 20 may be arranged on the cylindrical lateral surface 162 of the rotor 16, and on both base circles 164, 166 of the cylindrical lateral surface.

The movement of the blades 280, 300, 320 may be accomplished by arranging elastic means, such as springs (not shown in the attached figures) adapted to push the blades 280, 300, 320 toward the rotor 16.

In this case, the system is made lighter, since there are no dedicated mechanisms for moving the blades 280, 300 and 320.

According to a possible alternative embodiment, the blades 280, 300, 320 may be moved by cam means (not shown in the attached figures).

In particular, the rotor 16 may comprise one cam or one cam on each side, which reproduce the profile of the cross section of said rotor. The cam or cams, which are integral parts of the rotor, by coupling with a blade portion 280, 300, 320, may move the blade relative to the respective seat.

According to a possible embodiment, in order to reduce wear on the rotor 16, the cam may be designed so that when the blade 280, 300, 320 is not located at the at least one cavity 20, it is upheld by the rotor 16. In this way it is possible to eliminate wear on the rotor 16 due to the rubbing of the blade 280, 300, 320 when it is not at the at least one cavity 20 and to contain sealing problems between the rotor 16 and the housing 14.

Doing thusly eliminates an additional "mechanism" by reducing weight, facilitating the designers' task and ultimately the production of the part.

In a further embodiment, the movement of the blades 280, 300, 320 may be controlled by means of a rod and rocker system (not shown in the appended figures), for example, with a system similar to that shown in U.S. Patent Application US 2017/089201.

According to a possible embodiment, the housing may comprise a plurality of combustion chambers 22, for example two or more.

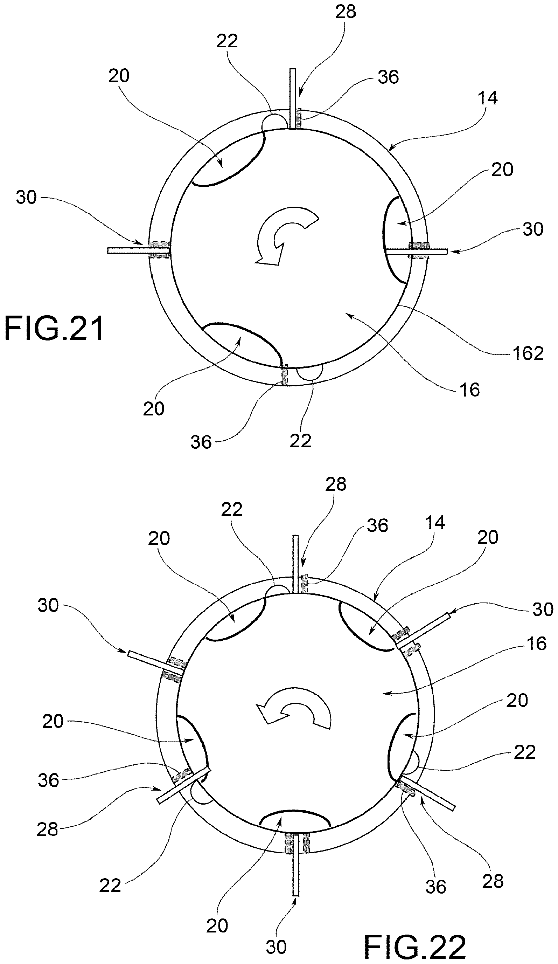

As an example, a possible embodiment prepared with two combustion chambers 22 and three cavities 20 is shown schematically in Fig. 21. This embodiment is characterized in that at any given time there will be three different situations for the three cavities 20, in a first cavity 20 the expansion, in a second cavity 20 the exhaust and intake, and in a third cavity 20 the compression.

In the further example, shown in Fig. 22, a possible embodiment provided with three combustion chambers 22 and five cavities 20 is shown schematically.

As is readily apparent from the series of Fig. 1-4, the combustion chamber 22 receives compressed air carried by the at least one cavity 20 of the rotor 16, which is "emptied" by means of the compression blade 320, and by means of the duct 40, into the combustion chamber 22.

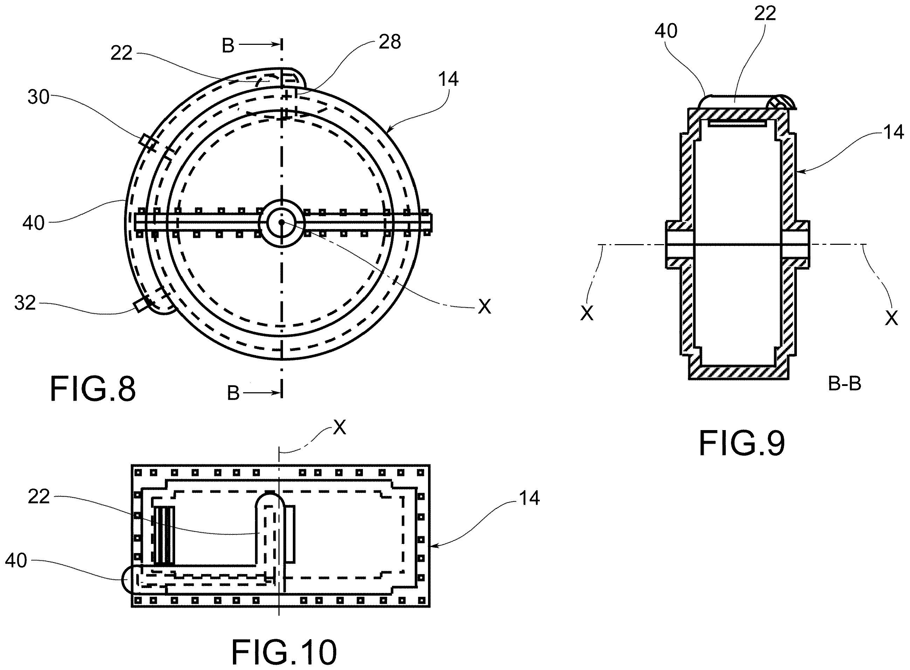

According to a possible embodiment, which may be seen for example in Fig. 8 and 11, the compression duct 40 may be integrated into the housing structure 14. In particular, the compression duct 40 may be integrated into the housing structure 14 upstream or downstream of the combustion chamber. In particular, the compression duct 40 may be integrated into the structure of the housing 14 downstream of the combustion chamber, for example where the housing is arranged with a plurality of combustion chambers and/or a plurality of cavities, so as to provide a/the shortest extension of the compression duct 40.

According to a possible embodiment, the compression duct 40 may be arranged with check valves 42, 44. A possible embodiment of the check valves 42, 44 is shown in Fig. 11.

As shown in Fig. 11, the inlet and outlet of the compression duct 40 may be arranged with check valves 42, 44. According to a possible embodiment, the check valves 42, 44 may be of the freely operated type with springloaded closure.

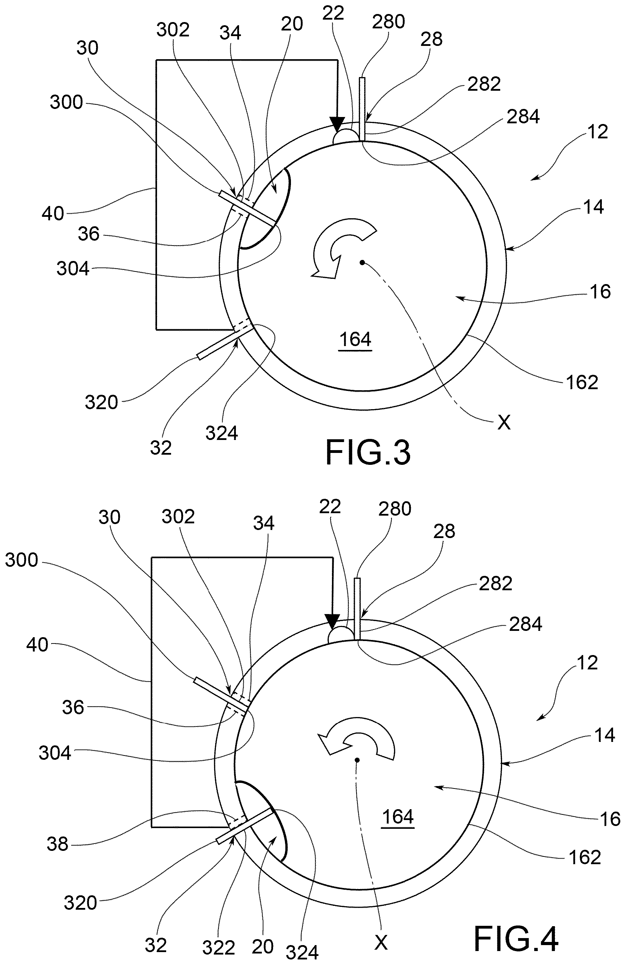

Check valves 42, 44 make it possible to recover the work done on the part of the air inside the compression duct 40 and prevent overpressure at the moment of the explosion of the mixture from causing the combustion gases to flow back into said duct and, subsequently, into the cavity 20 when it is in the compression position (see Fig. 4).

The check valves 42, 44 close as the end of the compression phase approaches and in the moment wherein the pressure difference between one side and the other is zero. In this way, the air remaining in the duct 40 is always at maximum compression and will remain available for the next cycle.

According to a possible embodiment, the at least one combustion chamber 22 may be a recess integral with the housing 14 in which the fuel injector and spark plug of the mixture and one of the check valves 44 are inserted.

Advantageously, the axial dimension of the at least one combustion chamber may be as wide as the cavity 20 of the rotor 16.

The combustion chamber 22 is supplied with compressed air by means of the cavity 20 passed below the position relative to the compression. The air arrives in the combustion chamber via the relevant compression port 40 at the moment of compression.

As mentioned above, the exhaust opening 34, the intake opening 36 and the compression opening 38 are obtained on the housing 14. Advantageously, the openings 34, 36, 38 may be without opening/closing valves, thus eliminating moving members that further subtract work from the engine, reducing noise and weight of the unit and improving efficiency.

According to a possible embodiment, the openings may have a particular design in order to facilitate the passage and reduce the resistance of the air or combustion gases passing through said opening.

The openings may also be positioned laterally so that the intake duct is substantially parallel to the axis of rotation x of the rotor 16.

The blades 280, 300, 320 of the rotary motor have sealing and separation tasks between the different steps of the process.

In particular, the intake/exhaust blade 300 has a dual task: on the one hand, it will need to create a vacuum to draw in fresh air (unless it is already compressed) through the intake opening 36, and scrape the combustion gases, and expel them through the exhaust opening 34.

With regard to the compression blade 320, on the one hand, it compresses the fresh air present inside the cavity, and on the other hand, it creates a negative pressure which will allow for a greater impulse when passing the at least one cavity 20 under the combustion chamber at the moment of expansion.

With regard to the combustion blade 280, it blocks the expansion of the mixture in the direction opposite to the intended direction of rotation of the rotor 16 by forcing its rotation. The rotation will have more momentum due to the presence of a negative pressure on its other side.

Referring to Fig. 1, the intake/exhaust blade 300 may be positioned between the two exhaust and intake ducts and may separate the space formed on the housing into two halves to form the two ducts.

Advantageously, the blade will be equipped with a sealing ring along the perimeter that has contact with the cavity, and the alternating flow slot will also be equipped with a sealing ring, which will prevent lubricating oil from seeping into the cavity and mixing with the air and/or fuel.

The combustion blade 280 may be an integral part of the combustion chamber and may also feature the same specifications as the intake/exhaust blade 300.

Similarly, the compression blade 320 may also be provided with the same specifications as the intake/exhaust blade 300.

A possible embodiment of a blade, for example the combustion blade 280 of a rotary engine according to this invention, is shown in Fig. 14. The intake/exhaust blades 300 and the compression blades 320 may be made in substantially the same manner as the combustion blades 280.

In particular, as reported above, the blade is arranged with an end edge 284.

The blade may be substantially U-shaped wherein on the inner connecting portion the end edge 284 is arranged. Furthermore, the blade may be arranged with at least one side arm 286, 288 for guiding said blade along the respective seat through at least one respective cam.

The hermetic sealing system may be divided into at least two different sections: the one concerning the rotor 16 with the housing 14 and the one concerning the rotor 16 with the blade 280, 300, 320.

With respect to the hermetic seal between the rotor 16 and the housing 14, for example, three types of elastic bands may be used which will be mounted on the housing.

Specifically, a first substantially U-shaped elastic band 46 is shown in Fig. 12. Said elastic band 46 has the task of rubbing on the faces of the rotor 16 (the end faces 164, 166 and the side face 162 where the cavity 20 is also located).

According to a possible embodiment, two U-shaped elastic bands may be arranged downstream of the combustion chamber 22, and the intake opening 36, and two others may be arranged upstream of the exhaust opening 34 and the compression opening 38, respectively.

The motor may also be arranged with a second arched elastic band 48, shown in the example in Fig. 13.

According to a possible embodiment, the second elastic band 48 may be positioned on the lateral surface 162 at the height of the two edges of the rotor between the two U-shaped rings 46, the ones in the space between the ring downstream of the combustion chamber 22 and the ring upstream of the exhaust opening 34, the others between the rings arranged between the intake opening 36 and the compression opening 38.

The length of the arched band 48 is substantially equal to that given by the distance between the two U-shaped rings 46.

The third arched band is positioned in the same manner as the previous bands but at the end faces 164, 166 of the rotor 16. Again, the length will be essentially given by the distance between the two U-shaped bands 46.

On the other hand, with respect to hermetic sealing between the rotor 16 and the blade 280, 300, 320, the coupling with the at least one cavity 20 is of particular importance. In effect, hermeticity is necessary to avoid the leakage of combustion gases and/or compressed air from one side to the other of said blade when it is inside the cavity. Hermeticity is maintained by arranging the blade with a sealing elastic band that wraps around the edge 284 in contact with the cavity.

The engine according to this invention may be arranged with a cooling system 50.

According to a possible embodiment, the cooling system 50 may be integrated into the housing 14, in particular by providing ducts arranged transversely along the circumference, whereby a dual system is formed, with the liquid flowing in two opposite directions so that there is no thermal imbalance between the right and left sides of the assembly.

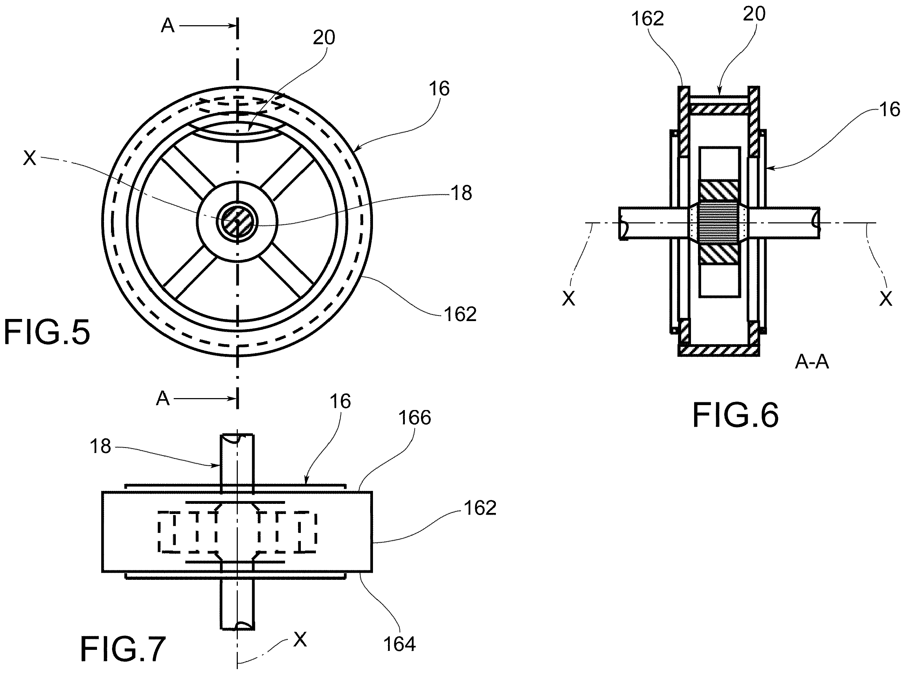

According to a possible embodiment and as highlighted in Fig. 5, the rotor 16 may be made as a spoked wheel. This configuration may be extended to the housing 14 by making the necessary comparisons and calculations. This type of construction may be used to increase the degree of cooling of the motor 12 by making an air flow created by a special fan pass through the center in an axial direction, along the X-axis.

According to a possible embodiment of this invention, the fan will be able to perform the dual function of compressing a portion of air that will feed the engine while the remaining portion will be used for cooling. This specifies, keeping in mind that which occurs with the most modern turbofans installed on the most modern passenger aircraft, that on these the roles are instead reversed, where a large frontal fan moves a large mass of air, the inner part of which is sent to the main compressor to be sent to the combustion chambers of the reactor to generate the main thrust while the outermost part is immediately expelled to further increase the overall thrust, dilute the exhaust gases, and allow the reduction of noise created by said turbojet.

According to a possible embodiment, the blades may be cooled through the use of sodium, lithium and potassium salts inserted within the blade. Advantageously, their melting as the temperature increases improves the heat transfer to the surrounding parts and especially to the seat thereof.

With regard to the lubrication system, it must provide for reducing friction between the moving parts, i.e., between the rotor 16 and the housing 14, between the rotor 16 and the blade 280, 300, 320, between the blade 280, 300, 320 and the seat thereof, and between the drive shaft and its seat.

More specifically, with respect to the lubrication between the rotor and housing, this is divided into two aspects: the lubrication between the lateral surface 162 of the rotor and those of the ends 164, 166. The first will take place through the application of an oil film by the elastic band downstream of the combustion chamber and the intake port and the recovery of the same by the subsequent oil scraper preceding the exhaust port and the combustion chamber. The oil will be spread only on the circular surface that does not contain the cavity. The second will occur in the same manner, but the oil will be spread over the entire surface.

On the other hand, as far as lubrication between the rotor and the blade is concerned, in analogy to that which happens in current engines wherein lubrication between the piston rings and the cylinder is absent, so also in this case said lubrication is absent or absolutely minimal, due to the possible tapping of the oil mentioned above, so as not to involve alterations in the air-fuel mixture.

Coming now to the lubrication between the blade 280, 300, 320 and the respective seat, this may be accomplished by immersing the blade in oil on the outside of the seat, between the exhaust and intake openings for the intake/exhaust blade 300, laterally to the combustion chamber for the combustion blade 280 and laterally to the compression opening for the compression blade 320.

With the regard to the lubrication of the drive shaft in its seat, this may be done by means of pressure injection of the lubricant into the normal bearings and possibly thrust bearings and subsequent recovery for recycling.

It should be noted that the drive shaft of the rotary engine according to this invention is not subject to a gyroscopic resultant of applied forces as with the current internal combustion engines since the forces due to explosion and expansion within the cavity act tangentially to the rotor 16 and perpendicular to the axis of rotation x.

According to possible embodiments of this invention, the materials and alloys that may be used in the construction of the engine may, for example, be metallic materials and special steels or alloy steels and ceramic and advanced ceramic materials.

For example, in a manner known per se, the following may be used:
- high temperature-resistant steels, such as tungsten, nickel-chrome, titanium-cobalt-molybdenum steels with low iron content including Nimonic together with Inconel and Nickelvac;
- aluminum alloys;
- titanium alloys, which possess remarkable strength features in relation to weight and exceptional resistance to corrosion;
- ceramic and advanced ceramic materials.

The blades 280, 300, 320 may be made, for example, of tungsten or titanium alloy or bimetallic chrome-silicon or nickel-chromium-silicon alloy or special austenitic nickel-chromium-manganese-molybdenum steels, at times with surface hardening (nitriding, stellite coating).

Moreover, special high nickel-chromium alloys such as Nimonic, Inconel or Nickelvac may be used. In particular, the blades may be subjected to galvanic treatment in order to deposit a thin surface layer of hard chrome.

The advantages that may be achieved by this invention are thus now apparent.

In particular, the rotary engine of this invention allows for the first- and second-degree vibrations present in the current reciprocating cylinder piston engines and composed of a connecting rod-crank to be eliminated.

In effect, the rotary engine of this invention has no reciprocating moving parts except for the blades, no moving parts subject to centrifugal force, no parts in eccentric movement, no need for connecting rod-crank devices, no use of rods and rockers, and no need for adjustments throughout its life cycle.

In addition, the rotary engine described above allows for the reduction of the overall dimensions comparable to the single-cylinder base of a two-stroke or four-stroke engine.

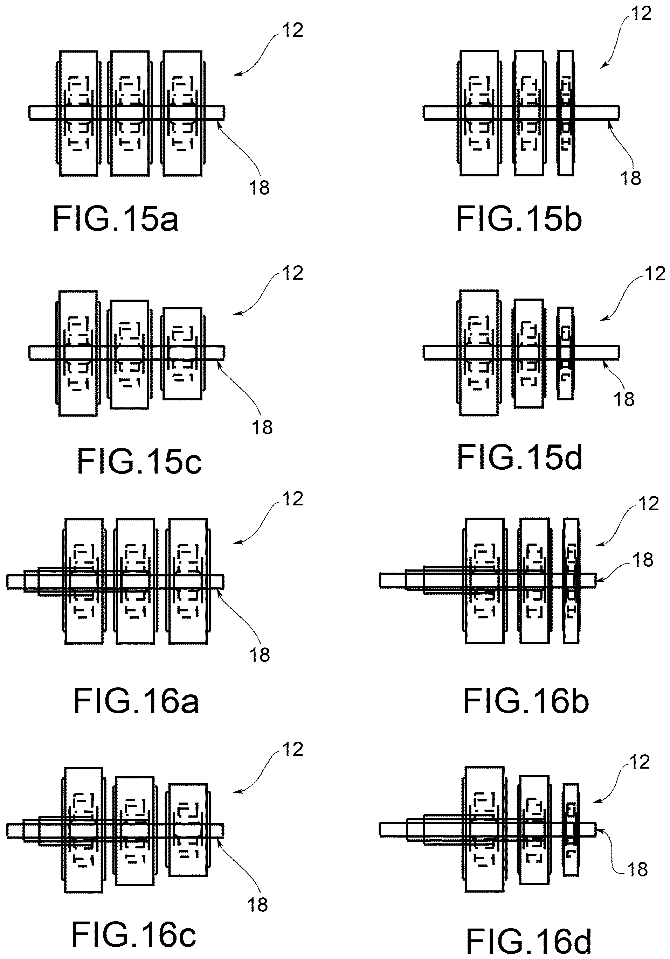

The engine so configured also allows it to be modular and expandable in terms of number of rotors similar to a multi-stage turbojet without having to worry about energy balancing or complicated mechanics. In effect, several rotors may be put in series and keyed on the same drive shaft or even keyed on several shafts coaxial to each other (Fig. 15A-16D).

Again, several rotors of different diameters may be keyed to the same drive shaft to be activated or deactivated according to the power demand of the moment, or keyed to coaxial shafts, thus also operating as a gearbox for current vehicles.

These configurations do nothing other than increase the power while reducing the overall dimensions and at the same time increasing the specific power.

Therefore, indirectly, the reduction of the overall dimensions allows for the increase of space in the passenger compartment with the same external dimensions, the decrease of the overall weight of the vehicle and therefore savings in terms of fuel.

Moreover, the decrease in weight is due not only to the smaller size compared to the cylinder/piston engine, but also to the fact that it is not necessary to add counterweights to the power shaft to eliminate inertia and balance the forces; on the contrary, to perform balancing it is necessary to operate in the same way as for balancing tires.

The rotary engine architecture according to this invention further allows a decrease in energy spent for cooling and lubrication that will be able to occur in a natural centrifugal way limiting the number of moving parts.

But the most important improvement is the reduction of noise and the complete elimination of engine vibrations that will no longer affect the vehicle.

The engine has a more elastic behavior because it basically behaves like a turbojet and has high torque at low rpm that increases linearly with rpm.

A person skilled in the art will be able to make modifications to the embodiments described above and/or substitute described elements with equivalent elements in order to satisfy particular requirements, without departing from the scope of the accompanying claims.

## Claims

1. Rotary engine architecture (12) comprising at least one housing (14) and at least one rotor (16) arranged with a shaft (18) and adapted to rotate inside said housing (14), around an axis of rotation (x);
said rotor (16) comprising at least one cavity (20);
said housing (14) comprising at least one combustion chamber (22) equipped with at least one fuel injector (24) and one ignition device (26);
said housing (14) also comprising:
- at least one combustion unit (28) comprising a combustion blade (280) movable in a respective combustion blade seat (282) so as to protrude towards the inside of said housing (14); said combustion blade (280) being placed upstream of said combustion chamber (22) ;
- at least one intake/exhaust unit (30) comprising an intake/exhaust blade (300) movable in a respective intake/exhaust blade seat (302) so as to protrude towards the inside of said housing (14); said intake/exhaust blade (300) being interposed between an exhaust opening (34) and an intake opening (36); said exhaust opening (34) being upstream of said intake/exhaust blade (300); and
- at least one compression unit (32) comprising a compression blade (320) movable in a respective compression blade seat (322) so as to protrude towards the inside of said housing (14); and a compression opening (38) provided upstream of said compression blade (320); said compression unit (32) also comprising a compression duct (40) adapted to the communication of fluid in selective communication between said compression opening (38) and said combustion chamber (22).
wherein said combustion blade (280), said intake/exhaust blade (300) and said compression blade (320) are adapted to rub with one end edge (284, 304, 324) on the lateral surface (162) of said rotor (16) and in particular of said at least one cavity (20).

2. Rotary engine architecture (12) according to the preceding claim, **characterized in that** said rotor (16) comprises a substantially cylindrical lateral surface (162) and two end circles (164, 166), said at least one cavity (20) being provided on the lateral surface (162), and/or in at one or both end circles (164, 166).

3. Rotary engine architecture (12) according to any of the preceding claims, **characterized in that** at least two rotors (16) are keyed onto the same drive shaft (18) .

4. Rotary engine architecture (12) according to any of the preceding claims, **characterized in that** the movement of said blades (280, 300, 320) occurs through the provision of elastic means, such as springs, adapted to push the blades (280, 300, 320) towards the rotor (16).

5. Rotary engine architecture (12) according to any of the claims 1-3, **characterized in that** said blades (280, 300, 320) are moved by cam means.

6. Rotary engine architecture (12) according to any of the preceding claims, **characterized in that** said housing comprises a plurality of combustion chambers (22) .

7. Rotary engine architecture (12) according to any of the preceding claims, **characterized in that** it comprises two combustion chambers (22) and three cavities (20).

8. Rotary engine architecture (12) according to any of the claims 1-6, **characterized in that** it comprises three combustion chambers (22), and five cavities (20).

9. Rotary engine architecture (12) according to any of the preceding claims, **characterized in that** the compression duct (40) is integrated into the housing structure (14).

10. Rotary engine architecture (12) according to the preceding claim, **characterized in that** said compression duct (40) is provided with check valves (42, 44).

11. Rotary engine architecture (12) according to any of the preceding claims, **characterized in that** at least one combustion chamber (22) is a niche in the housing (14) .

12. Rotary engine architecture (12) according to any of the preceding claims, **characterized in that** said intake/exhaust blade (300) is positioned between the two exhaust and intake ducts.
